# EUROPEAN PATENT SPECIFICATION

(11) **EP 1 724 161 B1**
(45) Date of publication and mention of the grant of the patent: **28.05.2008**
(21) Application number: 06018336.5
(22) Date of filing: 09.12.2004
(51) Int. Cl.: B60R 21/16

(54) **Curtain airbag device**
Vorhang-Gassack
Coussin gonflable en forme de rideau

(30) Priority: 19.12.2003 JP 2003423066
(43) Date of publication of application: 22.11.2006
(62) Divisional of application: 04029211.2
(73) Proprietor: TAKATA CORPORATION, Minato-ku, Tokyo 106-8510 (JP)
(72) Inventor: Kumagai, Masayoshi, Tokyo 106-8510 (JP); Noguchi, Atsushi, Tokyo 106-8510 (JP)
(74) Representative: Banzer, Hans-Jörg

(56) References cited:
- EP-A- 1 260 414
- US-A1- 2002 024 203
- US-A1- 2003 178 824

## Description

The present invention relates to curtain airbag devices provided with curtain airbags which are capable of being deployed along inner side surfaces of vehicle cabins.

### [Background Art]

In a vehicle provided with a curtain airbag device, when the vehicle is involved in, for example, a side-on collision or rollover, curtain airbags are deployed downward along inner side surfaces (for example, doors and pillars) of the vehicle cabin so as to protect the head of each vehicle occupant and to keep each vehicle occupant inside the vehicle cabin.

US Patent No. 6,237,938 discloses a guide provided on a C pillar for guiding downward along the pillar the rear portion of a curtain airbag inflatable along the inner side surface of a vehicle cabin.

Moreover, the guide member in the US Patent No. 6,237,938 includes a member called a track having a box-shaped cross-section and a slider called an element and is arranged in the track movably in the longitudinal direction of the track. The rear end portion of the curtain airbag is tied to the element. For preventing the rear edge portion of the curtain airbag from being returned upward after being moved downward, latches are arranged at a regular interval along the substantially entire length of the track member.

The top and bottom ends of the track are provided with mounting flanges, and each of the flanges is fixed to the C pillar with a bolt or a screw.

US 2002/0024203 A1 discloses a curtain airbag device comprising a curtain airbag and a gas generator for supplying gas to a curtain airbag along a flow path running vertically at an upper side of the curtain airbag. The curtain comprises vertical chambers and chamber adjacent to the vertical chambers, wherein each adjacent chamber is connected to a vertical chamber at a lower side thereof. The curtain airbag comprises a front part and a rear part, wherein an upper portion of the rearmost adjacent chamber of the front path is communicated with a foremost adjacent chamber of the rear part via an elongated path at an upper part thereof.

Curtain airbag devices where a curtain airbag deploys guided by a guide member are known from documents EP 1 260 414 A2 and US 2003/0178824 A1.

### [Problems to be Solved by the Invention]

Accordingly, the object of the present invention is to provide a curtain airbag device in which each curtain airbag is capable of being deployed very smoothly along a guide member.

### [Means for Solving the Problems]

According to the present invention, this object is achieved by a curtain airbag device as defined in claim 1. The dependent claim defines an embodiment of the invention.

A curtain airbag device according to the present invention includes a curtain airbag which is capable of being deployed downward along an inner side surface of a vehicle cabin; a gas generator for supplying gas to the curtain airbag so as to inflate the curtain airbag; and a guide member attached to a pillar of a vehicle and extending vertically, the guide member guiding the curtain airbag for the downward deployment. The curtain airbag includes a vertical chamber and an adjacent chamber adjacent to the vertical chamber, the vertical chamber being inflatable so as to extend vertically along the guide member. An upper portion of the curtain airbag is provided with a flow path for transferring the gas supplied by the gas generator. An upper portion of the vertical chamber communicates with one end of the flow path. The vertical chamber and the adjacent chamber communicate with each other only at a lower portion of the vertical chamber and a lower portion of the adjacent chamber. The device further comprises a bag chamber adjacent to the adjacent chamber and communicating with the adjacent chamber only at upper portions thereof such that the bag chamber is inflated only via the vertical chamber and the adjacent chamber.

Similarly, according to such a curtain airbag device, a large amount of gas enters the vertical chamber when the curtain airbag starts to be deployed. This allows the vertical chamber to be inflated downward quickly so that the curtain airbag can be deployed very quickly while being guided by the guide member.

According to the present invention, it is preferable that the curtain airbag further includes a link strap protruding from the lower end portion of the vertical chamber, the link strap being guided by the guide member. According to such a structure, when the vertical chamber is inflated downward, the link strap smoothly moves downward as it is pulled by the lower end portion of the vertical chamber.

### [Advantages]

According to the curtain airbag device and the guide unit of the present invention, when the curtain airbag is to be deployed, the curtain airbag is guided by the guide member and the vertical chamber disposed near the guide member of the curtain airbag is inflated downward quickly so as to allow quick deployment of the curtain airbag.

### [Brief Description of the Drawings]

Fig. 1 is a schematic diagram of a curtain airbag device which is not an embodiment of the present invention.
Fig. 2 includes a side view and a cross-sectional view of a curtain airbag.
Fig. 3 is an enlarged view of a rear portion of the curtain airbag of Fig. 2 which is not an embodiment of the present invention.
Fig. 4 is an enlarged view illustrating a rear portion of a curtain airbag of a curtain airbag device according to an embodiment of the present invention.

### [Best Mode for Carrying Out the Invention]

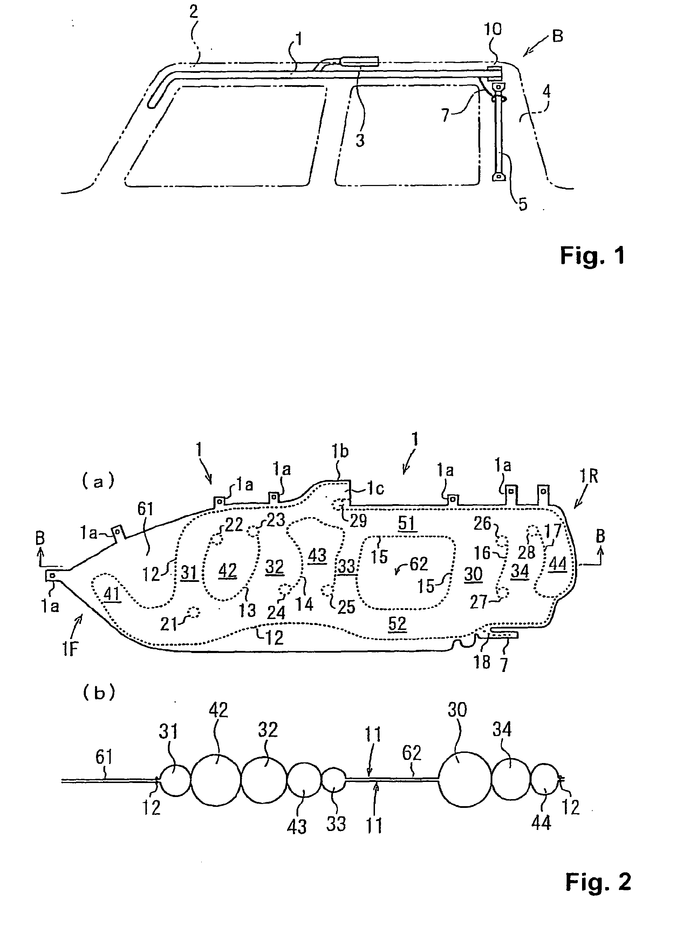

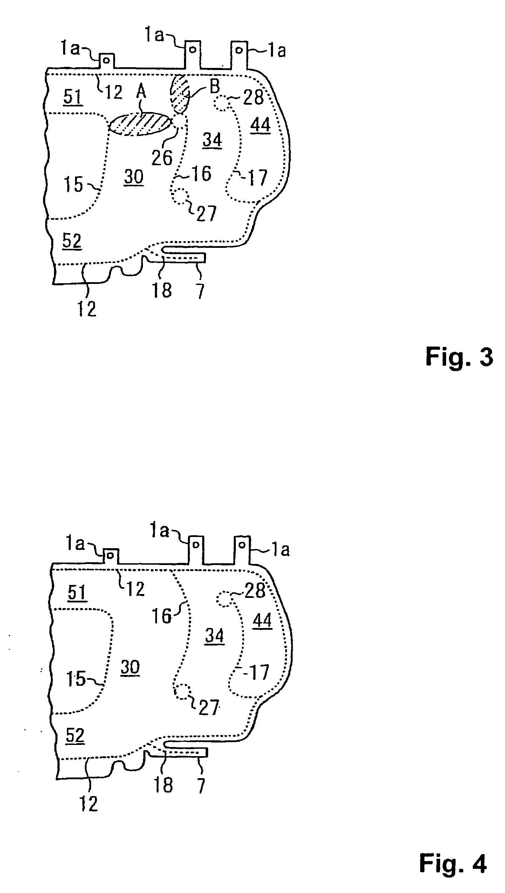

Embodiments will now be described with reference to the drawings. Fig. 1 illustrates a curtain airbag device and a guide unit thereof which is not an embodiment of the present invention. Fig. 2(a) is a side view of a curtain airbag in its inflated state. Fig. 2(b) is a cross-sectional view taken along line B-B in Fig. 2(a). Fig. 3 is an enlarged view of a rear portion of the curtain airbag.

According to Figs. 1-3, a curtain airbag 1 is disposed along a roof side 2 of a vehicle (border section between the ceiling and the inner side surface of a vehicle cabin) while being folded in a slender manner in the longitudinal direction of the vehicle. When a vehicle is involved in a side-on collision or a rollover, for example, the curtain airbag 1 is inflated by gas being sent from an inflator 3 and is deployed in the downward direction of the vehicle body along the side surface, i.e. doors and pillars, in the vehicle cabin. An upper edge of the curtain airbag 1 is provided with tabs 1a (see Fig. 2(a)) which are fastened to the corresponding roof side 2.

Referring to Fig. 2(a), the central portion of the upper edge of the curtain airbag 1 with respect to the longitudinal direction is provided with a projection 1b which extends upward. The projection 1b is provided with a gas-entrance hole 1c. A tip of the inflator 3 is inserted through the gas-entrance hole 1c and is tied thereto with a band (which is not shown in the drawings).

One of the pillars in a vehicle (a C pillar 4 in the first embodiment) has a guide rod 5 attached thereto, which functions as a guide member for guiding the rear portion of the curtain airbag 1 along the C pillar 4 when the curtain airbag 1 is deployed along the C pillar 4 in the downward direction of the vehicle body. The guide rod 5 has a rod-like structure which extends along the C pillar 4 in the vertical direction of the vehicle body. Both the upper and lower ends of the guide rod 5 are fixed to the C pillar 4 with, for example, bolts.

The vicinity of the bottom corner area in the rear portion of the curtain airbag 1 has a base end of a link strap 7 attached thereto. On the other hand, a extremity of the link strap 7 is loosely tied around the guide rod 5. The link strap 7 is movable vertically along the guide rod 5.

A curtain-guide member 10, also known as a jump base, is disposed on the roof side 2 above the C pillar 4. When the curtain airbag 1 is to be deployed, the curtain-guide member 10 allows the curtain airbag 1 to pass over a pillar garnish so that the curtain airbag 1 is guided towards the interior of the vehicle cabin.

Although not shown in the drawings, the roof side 2 is provided with a roof-side garnish which covers the curtain airbag 1.

The curtain airbag 1 is formed by overlapping two sheets 11 and 11 having substantially the same shape, such that one of the sheets faces an inner side surface of the vehicle cabin and the other faces the interior of the vehicle cabin. The two sheets 11 and 11 are connected to each other by linear connected portions 12 to 17 and circular connected portions 21 to 29 so as to form a first vertical chamber 30, vertical chambers 31 to 34, bag chambers 41 to 44, horizontal chambers 51 and 52, and non-inflatable portions 61 and 62.

The linear connected portions 12 to 18 and the circular connected portions 21 to 29 hermetically join the sheets 11 and 11 together. For the connection between the two sheets 11 and 11, high-strength connecting means (such as stitching with high-strength threads, bonding with an adhesive having high adhesivity, or welding) is used so that the two sheets 11 are prevented from being separated from each other even when the pressure inside the curtain airbag 1 reaches the upper limit pressure value.

The linear connected portion 12 extends substantially around the curtain airbag 1, but at a front portion 1F of the curtain airbag 1, the linear connected portion 12 extends downward from the upper edge of the front portion 1F so as to form a substantially U-shape. This forms the non-inflatable portion 61 along the upper edge of the front portion 1F and the bag chamber 41 at the frontmost part of the front portion 1F.

The linear connected portion 12 extends along an edge of the projection 1b of the curtain airbag 1, but is cut off at the rear edge of the projection 1b so as to form the gas-entrance hole 1c of the curtain airbag 1.

The linear connected portion 13 is disposed slightly towards the front of the curtain airbag 1 with respect to the center of the curtain airbag 1. The linear connected portion 13 is U-shaped, and its inner region forms the bag chamber 42. The upper portion of the bag chamber 42 communicates with the gas-entrance hole 1c, whereas the lower portion has no openings.

The linear connected portion 13 and the peripheral linear connected portion 12 at the front portion 1F of the curtain airbag 1 have the vertical chamber 31 disposed therebetween. The upper portion of the vertical chamber 31 communicates with the gas-entrance hole 1c, and the lower portion communicates with the bag chamber 41 and with the lower portion of the vertical chamber 32, which will be described below. To prevent the lower portion of the vertical chamber 31 from being over-inflated, the circular connected portion 21 is provided.

The linear connected portion 14 has a reversed U-shape and is disposed at the central portion of the curtain airbag 1 with respect to the longitudinal direction. The inner region of the linear connected portion 14 forms the bag chamber 43. The lower portion of the bag chamber 43 communicates with the lower portions of the vertical chambers 32 and 33, whereas the upper portion of the bag chamber 43 has no openings.

The linear connected portion 14 and the linear connected portion 13 have the vertical chamber 32 disposed therebetween. The upper portion of the vertical chamber 32 communicates with the gas-entrance hole 1c.

The linear connected portion 15 is disposed slightly towards the back of the curtain airbag 1 with respect to the center of the curtain airbag 1. The linear connected portion 15 is substantially square-shaped. The upper edge and the lower edge of the linear connected portion 15 are respectively not in contact with the upper edge and the lower edge of the linear connected portion 12. Thus, the horizontal chamber 51 is formed between the upper edge of the linear connected portion 12 and the upper edge of the linear connected portion 15, and the horizontal chamber 52 is formed between the lower edge of the linear connected portion 12 and the lower edge of the linear connected portion 15.

The linear connected portion 15 and the linear connected portion 14 have the vertical chamber 33 disposed therebetween. The upper portion of the vertical chamber 33 communicates with the front portion of the horizontal chamber 51 and with the gas-entrance hole 1c. The lower portion of the vertical chamber 33 communicates with the lower portion of the bag chamber 43 and the front portion of the horizontal chamber 52.

The inner region of the linear connected portion 15 is cut off from the gas-entrance hole 1c so as to form the non-inflatable portion 62.

At the rear portion of the curtain airbag 1, the linear connected portion 16 extending vertically is disposed. Moreover, further towards the back of the curtain airbag 1, the linear connected portion 17 having a substantially L-shape is disposed.

The linear connected portions 15 and 16 have the first vertical chamber 30 disposed therebetween. The upper and lower portions of the first vertical chamber 30 respectively communicate with the horizontal chambers 51 and 52.

The linear connected portions 16 and 17 have the vertical chamber 34 disposed therebetween. The upper and lower portions of the vertical chamber 34 respectively communicate with the upper and lower portions of the first vertical chamber 30.

The bag chamber 44 is formed between the linear connected portion 17 and a part of the linear connected portion 12 extending along a rear portion 1R of the curtain airbag 1. The upper portion of the bag chamber 44 communicates with the upper portion of the vertical chamber 34, whereas the lower portion of the bag chamber 44 has no openings.

Opposite ends of each of the linear connected portions 13, 14, 16, and 17 are provided with the corresponding circular connected portions 22 to 28 for reinforcement. The lower end of the linear connected portion 17 is connected with the linear connected portion 12.

The link strap 7 is positioned below the first vertical chamber 30. The link strap 7 is formed by the sheets 11 and 11 extending in an elongated shape and joined together by the linear connected portion 18.

In this curtain airbag device, the rear edge of the linear connected portion 15 extends substantially vertically. The first vertical chamber 30 is formed between the rear edge of the linear connected portion 15 and the linear connected portion 16 extending vertically. The upper end of the linear connected portion 16 is connected with the circular connected portion 26.

The first vertical chamber 30 and the vertical chambers 31 to 34 extend from the upper edge to the lower edge of the curtain airbag.

Referring to Fig. 3, the horizontal chamber 51 extends to the upper portion of the first vertical chamber 30, and the upper end portion of the first vertical chamber 30 is open upward to one flow-path end of the horizontal chamber 51 in the direction. The upper portion of the first vertical chamber 30 below the linear connected portion 12 and adjacent to the circular connected portion 26 functions as a communication section between the flow-path end of the horizontal chamber 51 and the first vertical chamber 30. The opening area of this communication section (which is referred to as the cross-sectional area when the curtain airbag 1 is inflated) is defined as A.

On the other hand, a section between the upper linear connected portion 12 and the circular connected portion 26 functions as a communication section between the flow-path end of the horizontal chamber 51 and the vertical chamber 34. The opening area of this communication section is defined as B. This communication section is open to the horizontal chamber 51 in the horizontal direction.

The opening area A is equal to or greater than the opening area B, and is preferably five to ten times greater than the opening area B.

When a vehicle provided with such a curtain airbag device is involved in a side-on collision or a rollover, the inflator 3 generates gas so as to inflate the curtain airbag 1. The curtain airbag 1 pushes open the roof-side garnish, and is guided by the curtain-guide member 10 beyond the upper edge of the pillar garnish towards the interior of the vehicle cabin, and then is deployed downward along the vehicle interior side of the pillar garnish.

The rear portion of the deploying curtain airbag 1 is guided by the guide rod 5 via the link strap 7. The link strap 7 starts moving downward along the guide rod 5 when the curtain airbag 1 begins to be deployed. In this case, the link strap 7 moves downward while ripping through the pillar garnish and a weather strip.

Furthermore, the link strap 7 moves downward along the guide rod 5 with the curtain airbag until the curtain airbag 1 reaches the bottommost point of deployment. Since the link strap 7 connects the curtain airbag 1 and the guide rod 5 together, the curtain airbag 1 can be deployed along the corresponding side surface of the vehicle cabin.

The opening area A of the upper portion of the first vertical chamber 30 is equal to or greater than the opening area B of the upper portion of the vertical chamber 34. For this reason, a major portion of gas flowing towards the back of the curtain airbag via the horizontal chamber 51 changes its direction at the flow-path end of the horizontal chamber 51, such that a large amount of gas smoothly flows into the first vertical chamber 30. This allows the first vertical chamber 30 to be inflated downward quickly. Accordingly, the curtain airbag 1 is capable of being deployed quickly along the guide rod 5.

Fig. 4 illustrates an embodiment of the present invention, and is a diagram illustrating the rear portion of the curtain airbag.

According to the embodiment, the linear connected portion 16 extends further upward so as to be connected with the linear connected portion 12 adjacent to the upper edge of the curtain airbag. Other elements in the second embodiment are the same as those in the curtain airbag device shown in Figs. 1 to 3.

In the embodiment, all the gas flowing through the horizontal chamber 51 enters the first vertical chamber 30, and therefore, the first vertical chamber 30 can be inflated downward rapidly. Thus, the curtain airbag 1 is capable of being deployed rapidly along the guide rod 5.

The technical scope of the present invention is not limited to the above embodiment, and modifications are permissible within the scope of the present invention as defined in the claims. For example, the number and positions of the vertical chambers and the bag chambers are not limited to those in the drawings.

In the above embodiments, the vertical chamber 34 and the bag chamber 44 functions as the adjacent chambers of the first vertical chamber 30. On the other hand, three or more adjacent chambers may alternatively be provided.

## Claims

1. A curtain airbag device comprising:
a curtain airbag (1) which is capable of being deployed downward along an inner side surface of a vehicle cabin;
a gas generator (3) for supplying gas to the curtain airbag (1) so as to inflate the curtain airbag (1); and
a guide member (5) attached to a pillar (4) of a vehicle and extending vertically, for guiding the curtain airbag (1) for the downward deployment,
wherein the curtain airbag (1) includes a vertical chamber (30), an adjacent chamber (34) adjacent to the vertical chamber (30), and a bag chamber (44) adjacent to the adjacent chamber (34), the vertical chamber (30) being inflatable so as to extend vertically along the guide member (5),
wherein an upper portion of the curtain airbag (1) is provided with a flow path for transferring the gas supplied by the gas generator (3),
wherein an upper portion of the vertical chamber (30) communicates with one end of the flow path, and
wherein the vertical chamber (30) and the adjacent chamber (34) communicate with each other only at a lower portion of the vertical chamber (30) and a lower portion of the adjacent chamber (34),
wherein the adjacent chamber (34) and the bag chamber (44) communicate with each other only at an upper portion of the adjacent chamber (34) and an upper portion of the bag chamber (44) such that the bag chamber (44) is inflated only via the vertical chamber (30) and the adjacent chamber (34).

2. The curtain airbag device according to Claim 1, wherein the curtain airbag (1) further comprises a link strap (7) protruding from the lower end portion of the vertical chamber (30), the link strap (7) being guided by the guide member (5).

## Patentansprüche

1. Vorhangairbagvorrichtung umfassend:
einen Vorhangairbag (1), welcher in der Lage ist, nach unten entlang einer inneren Seitenoberfläche einer Fahrzeugkabine entfaltet zu werden,
einen Gasgenerator (3) zum Zuführen von Gas zu dem Vorhangairbag (1), um den Vorhangairbag (1) aufzublasen, und
ein an einer Säule (4) eines Fahrzeugs angebrachtes und sich vertikal erstreckendes Führungselement (5) zum Führen des Vorhangairbags (1) für die Entfaltung nach unten,
wobei der Vorhangairbag (1) eine vertikale Kammer (30), eine zu der vertikalen Kammer (30) benachbarte benachbarte Kammer (34) und eine zu der benachbarten Kammer (34) benachbarte Taschenkammer (44) umfasst, wobei die vertikale Kammer (30) aufblasbar ist, um sich vertikal entlang des Führungselements (5) zu erstrecken,
wobei ein oberer Abschnitt des Vorhangairbags (1) mit einem Strömungspfad zum Übertragen des von dem Gasgenerator (3) zugeführten Gases versehen ist,
wobei ein oberer Abschnitt der vertikalen Kammer (30) mit einem Ende des Strömungspfades kommuniziert, und
wobei die vertikale Kammer (30) und die benachbarte Kammer (34) miteinander nur an einem unteren Abschnitt der vertikalen Kammer (30) und einem unteren Abschnitt der benachbarten Kammer (34) kommunizieren,
wobei die benachbarte Kammer (34) und die Taschenkammer (44) miteinander nur an einem oberen Abschnitt der benachbarten Kammer (34) und einem oberen Abschnitt der Taschenkammer (44) kommunizieren, so dass die Taschenkammer (44) nur über die vertikale Kammer (30) und die benachbarte Kammer (34) aufgeblasen wird.

2. Vorhangairbagvorrichtung nach Anspruch 1, wobei der Vorhangairbag (1) darüber hinaus ein Verbindungsband (7) umfasst, welches von dem unteren Endabschnitt der vertikalen Kammer (30) hervorragt, wobei das Verbindungsband (7) durch das Führungsteil (5) geführt wird.

## Revendications

1. Un dispositif formant coussin gonflable sous forme de rideau comprenant :
un coussin gonflable sous forme de rideau (1) qui est capable d'être déployé de haut en bas le long d'une surface du côté interne d'un habitacle de véhicule,
un générateur de gaz (3) pour fournir du gaz au coussin gonflable sous forme de rideau (1) afin de gonfler le coussin gonflable sous forme de rideau (1) ; et
un organe de guidage (5) fixé et s'étendant verticalement à un montant (4) d'un véhicule et s'étendant verticalement, pour guider le coussin gonflable sous forme de rideau (1) pour le déploiement de haut en bas,
dans lequel le coussin gonflable sous forme de rideau (5) comprend une chambre verticale (30), une chambre adjacente (34) adjacente à la chambre verticale (30), et une chambre de coussin (44) adjacente à la chambre adjacente (34), la chambre verticale (30) étant gonflable afin de s'étendre verticalement le long de l'organe de guidage (5),
dans lequel une partie supérieure du coussin gonflable sous forme de rideau (1) est pourvue d'un passage d'écoulement pour transférer le gaz fourni par le générateur de gaz (3)
dans lequel une partie supérieure de la chambre verticale (30) communique avec une des extrémités du passage d'écoulement, et
dans lequel la chambre verticale (30) et la chambre adjacente (34) communiquent l'une avec l'autre uniquement au niveau d'une partie inférieure de la chambre verticale (30) et d'une partie inférieure de la chambre adjacente (34),
dans lequel la chambre adjacente (34) et la chambre de coussin (44) communiquent l'une avec l'autre seulement au niveau d'une partie supérieure de la chambre adjacente (34) et d'une partie supérieure de la chambre de coussin (44) de sorte que la chambre de coussin (44) soit uniquement gonflé à travers la chambre verticale (30) et la chambre adjacente (34).

2. Le dispositif formant coussin gonflable sous forme de rideau selon la revendication 1, dans lequel le coussin gonflable sous forme de rideau (1) comprend en outre une lanière de liaison (7) dépassant de la partie extrême inférieure de la chambre verticale (30), la lanière de liaison (7) étant guidée par l'organe de guidage (5).
